# EUROPÄISCHE PATENTSCHRIFT

(11) **EP 2 792 511 B1**
(45) Veröffentlichungstag und Bekanntmachung des Hinweises auf die Patenterteilung: **19.08.2015**
(21) Anmeldenummer: 14165097.8
(22) Anmeldetag: 17.04.2014
(51) Int. Cl.: B60C 25/14, B60S 5/04

(54) **Reifenfüllvorrichtung**
Tyre inflation device
Dispositif de gonflage de pneumatique

(30) Priorität: 19.04.2013 DE 102013104007
(43) Veröffentlichungstag der Anmeldung: 22.10.2014
(73) Patentinhaber: Schenck RoTec GmbH, 64293 Darmstadt (DE)
(72) Erfinder: Rogalla, Martin, 64297 Darmstadt (DE); Ortwein, Mark, 64287 Darmstadt (DE); Peinelt, Andreas, 64319 Pfungstadt (DE)
(74) Vertreter: Haar, Lucas Heinz Jörn

(56) Entgegenhaltungen:
- EP-B1- 1 671 820
- WO-A2-2009/155503
- US-A1- 2007 074 823

## Beschreibung

Die Erfindung betrifft eine Reifenfüllvorrichtung, der ein aus einer Radfelge und einem auf die Radfelge montierten schlauchlosen Reifen bestehendes Rad zuführbar ist, mit einer Reifenfüllglocke und mit einer Dichteinrichtung zur Abdichtung des Füllraums, wobei die Reifenfüllglocke aus einer längs der Drehachse des Rades bewegbaren Füllplatte und einem separaten Füllring zusammengesetzt ist, der aus mehreren gegeneinander auswechselbaren Füllringen unterschiedlichen Durchmessers auswählbar und in eine zur Drehachse zentrischen Lage bewegbar ist, wobei der in zentrischer Lage angeordnete Füllring mit einem ersten Rand an die Füllplatte anlegbar und gemeinsam mit dieser bewegbar ist und wobei ein der Füllplatte abgekehrter zweiter Rand des in zentrischer Lage angeordneten Füllrings gegen eine Seitenfläche des Reifens anlegbar ist. Die Erfindung betrifft außerdem ein Verfahren zum Füllen von auf eine Radfelge montierten schlauchlosen Reifen.

Bei der automatischen Serienfertigung werden Kraftfahrzeugräder mit schlauchlosen Reifen üblicherweise in einer in die Montagelinie integrierten automatischen Reifenfüllstation mit Druckluft befüllt. Die Felge mit montiertem Reifen wird hierbei auf eine geeignete Unterlageplatte gelegt, die das Rad beim Füllvorgang nach unten hin abdichtet. Auf die Reifenoberseite wird eine Füllglocke aufgesetzt, die den Reifen und die Felge nach oben hin abdichtet und durch welche die Reifenseitenwand beim Befüllvorgang so weit nach unten gedrückt wird, dass zwischen Reifenwulst und Felge ein Ringspalt entsteht, durch den die in die Füllglocke geleitete Druckluft in den Reifen einströmen kann. Durch die eingeströmte Druckluft wird der Reifen mit großer Kraft gegen die Auflageplatte und die Füllglocke gepresst. Ist der Fülldruck erreicht, so wird die Füllglocke angehoben, wodurch sich die Reifenseitenwände in axialer Richtung auseinander bewegen, bis die Reifenwulste ihre jeweilige Sitzposition auf der Felge eingenommen haben. Für einen solchen Füllvorgang muss die Füllglocke eine Öffnung haben, deren Durchmesser einerseits groß genug ist, damit die Füllglocke nicht an die Felge anstößt, sondern über die Felge gestülpt werden kann. Der Durchmesser der Öffnung darf andererseits aber nicht so groß sein, dass die Füllglocke die obere Reifenseitenwand radial außerhalb ihres Hochpunktes kontaktiert. Die Füllglocke würde nämlich dann die Radialbewegung des Reifens behindern, was dazu führen könnte, dass der Reifenwulst nicht richtig in seinen Sitz springt. Eine Füllglocke eignet sich somit nur für einen begrenzten Größenbereich von Kraftfahrzeugrädern.

Bei einer aus der DE 100 07 019 A1 bekannten Reifenfüllstation wird die Rad/Reifenanordnung so in der Reifenfüllstation eingelagert, dass sie mit der unteren Seitenfläche des Reifens auf einer Auflageplatte abgedichtet aufliegt. Oberhalb der oberen Seite der Rad/Reifenanordnung ist eine Reifenfüllglocke angeordnet, die zum Reifenfüllvorgang abgesenkt wird und mit ihrem ringförmigen Rand die Reifenseitenwand von der Felge wegdrückt, so dass ein ringförmiger Raum zwischen Reifenseitenwand und Radfelge entsteht, über den die Druckluftfüllung des Reifens erfolgt. Durch die Ausbildung zweier ineinander geschachtelten Füllglocken mit zwei unterschiedlichen Durchmessern können Räder mit unterschiedlichen Reifen- und/oder Felgengrößen in begrenztem Umfang gefüllt werden.

Um den Größenbereich von in derselben Reifenfüllstation zu füllender Reifen zu erweitern, weist eine aus EP 1 671 820 B1 bekannte Reifenfüllstation der eingangs genannten Art eine Reifenfüllglocke mit mehreren Füllringen unterschiedlichen Durchmessers auf, wobei je nach Reifengröße ein Füllring von geeignetem Durchmesser zum Einsatz kommt. Die Füllringe sind ringförmig an Haltern einer zentralen Bewegungseinrichtung befestigt und können mit dieser auf einer Kreislinie in die zentrische Lage zur Drehachse des Rades und axial bewegt werden. Jeweils ein in die zentrische Lage bewegter Füllring bildet zusammen mit einer Füllplatte die Füllglocke und ist mit einem Rand gegen die Seitenfläche eines zu füllenden Reifens bewegbar ist. Der Platzbedarf für diese bekannte Reifenfüllstation wird als nachteilig angesehen.

Bei einer aus WO 2009/155503 A2 bekannten Einrichtung zum Füllen des Reifens eines Fahrzeugrades sind mehrere, für verschiedene Raddurchmesser bestimmte Füllköpfe übereinander in Schlitzen eines vertikal bewegbaren Schieberegals angeordnet. Jeder Füllkopf kann wahlweise mit einer Füllplatte gekuppelt werden, die neben dem Schieberegal über einer Lagereinrichtung für das Rad mit dem zu füllenden Reifens angeordnet und vertikal bewegbar ist. Mittels einer längs einer horizontal verlaufenden Schiene bewegbaren Schleppvorrichtung kann ein durch vertikales Verfahren des Schieberegals in eine Ladeposition gebrachter Füllkopf aus dem Schieberegal herausgezogen und in eine Kuppelposition gebracht werden, in der der Füllkopf koaxial zu dem zu füllenden Reifen ausgerichtet ist. Die Füllplatte kann durch Absenken auf den sich in der Kuppelposition befindenden Füllkopf gesenkt und mit diesem gekuppelt werden. Anschließend kann durch gemeinsames Absenken von Füllplatte und Füllkopf der Reifen gefüllt werden, wobei der Füllkopf mit der Seitenwand des Reifens und mit der Radfelge in Dichteingriff ist.

Aus US 2007/0074823 A1 sind Reifenfüllvorrichtungen mit mehreren, voneinander unabhängigen Füllköpfen bekannt, die verschiedene Durchmesser zum Füllen verschiedener Reifengrößen haben. In einer Ausführung sind die Füllköpfe an einem Karussell angebracht, wobei durch Drehen des Karussells der jeweils gewünschte Füllkopf in die Position zum Füllen des Reifens gebracht wird. In einer anderen Ausführung sind mehrere Füllköpfe verschiedenen Durchmessers in einer Reihe hintereinander an einem horizontal angeordneten Schienensystem verschiebbar gehalten und können längs des Schienensystems in eine vorbestimmte Füllposition gebracht werden.

Aus DE10 2009 046 195 B3 Reifenfüllstation ist eine Füllvorrichtung mit einer an der Unterseite derselben angeordneten Trägerplatte bekannt, die in einer Geradführung längs einer Achse zwischen mehreren Stellungen hin und her bewegbar gelagert ist, wobei die Füllringe, in Bewegungsrichtung gesehen, hintereinander an der Unterseite der Trägerplatte gasdicht befestigt sind und die Trägerplatte innerhalb der Füllringe jeweils eine durchgehende Öffnungen aufweist und wobei in jeder der mehreren Stellungen der Trägerplatte eine andere der durchgehenden Öffnungen an die auf der Oberseite der Trägerplatte angeordnete Füllöffnung der Füllvorrichtung angeschlossen ist. Auch hierbei ist der Platzbedarf bei Anbringung von mehr als drei Füllringen an der Trägerplatte nachteilig.

Der Erfindung liegt die Aufgabe zugrunde, eine Reifenfüllvorrichtung der angegebenen Art zu gestalten, die bei geringem Platzbedarf für einen großen Bereich verschiedener Reifengrößen geeignet ist. Die Reifenfüllvorrichtung soll außerdem kostengünstig herstellbar, zuverlässig und wartungsarm sein und hohe Füllgenauigkeit gewährleisten.

Die Aufgabe wird nach der Erfindung durch eine Reifenfüllvorrichtung mit den in Anspruch 1 angegebenen Merkmalen gelöst. Vorteilhafte Ausgestaltungen der Reifenfüllvorrichtung sind in den weiteren Ansprüchen angegeben.

Nach der Erfindung umfasst die Reifenfüllvorrichtung, der ein aus einer Radfelge und einem schlauchlosen Reifen bestehendes Rad zuführbar ist, ein Maschinengestell, eine an dem Maschinengestell angeordnete Reifenfüllglocke und eine Dichteinrichtung zur Abdichtung eines Füllraums. Die Reifenfüllglocke ist aus einer Füllplatte und einem separaten Füllring zusammengesetzt, der aus mehreren gegeneinander auswechselbaren Füllringen unterschiedlichen Durchmessers auswählbar und in eine zur Drehachse des Rades zentrische Lage bewegbar ist, wobei die Füllplatte und ein erster Rand eines in der zentrischen Lage angeordneten Füllrings aneinander anlegbar sind und die Füllplatte gemeinsam mit dem Füllring längs der Drehachse bewegbar ist und wobei ein der Füllplatte abgekehrter zweiter Rand des in der zentrischen Lage angeordneten Füllrings gegen eine Seitenfläche des Reifens anlegbar ist. Die Reifenfüllvorrichtung umfasst weiterhin ein Füllringmagazin mit einem Magazingestell, das in mehreren parallelen, die Drehachse schneidenden Ebenen liegende, von Magazinführungen gebildete Aufnahmen aufweist, in denen jeweils ein Füllring aufnehmbar und quer zur Drehachse bewegbar ist, wobei das Magazingestell und die Füllplatte in Richtung der Drehachse in mehrere Übergabepositionen zueinander bewegbar sind, in denen die Magazinführung jeweils einer der Aufnahmen an eine an der Füllplatte angeordnete Füllplattenführung angeschlossen ist und ein Füllring, der sich in der in Übergabeposition angeordneten Magazinführung befindet, durch eine Fördervorrichtung in die Füllplattenführung und in dieser in die zentrische Lage förderbar ist.

Bei der Reifenfüllvorrichtung nach der Erfindung sind die verschiedene Durchmesser aufweisenden Füllringe vorzugsweise übereinander oder nebeneinander gestapelt in einem Magazin angeordnet, das sich außerhalb des Arbeitsraums befindet, der für die Bewegung der Füllglocke und die Zuführung des zu füllenden Rades benötigt wird. Die Gestaltung des Magazins hat den Vorteil, dass der Raumbedarf für das Bereithalten der verschiedenen Füllringe sehr klein ist und die einzelnen Füllringe mittels einfacher und kostengünstiger Einrichtungen in die zentrische Lage an der Füllplatte transportiert werden können. Die Füllringe können eine geringe Höhe haben, wodurch der Verbrauch an Druckluft beim Füllen klein gehalten wird.

Um das Magazingestell und die Füllplatte in die Übergabepositionen für das Zu- und Abführen eines Füllrings zu bewegen, ist lediglich ein Bewegen der Füllplatte oder des Magazingestells in Richtung der Drehachse erforderlich. Wird hierzu die Füllplatte verfahren, so muss der Verfahrweg der Füllplatte entsprechend der Anzahl der Übergabepositionen vergrößert werden. Außerdem ist hierbei eine komplizierte Vorrichtung zur Förderung der Füllringe in die Füllplattenführung erforderlich.

Eine bevorzugte Ausgestaltung der Erfindung sieht daher vor, dass das Magazingestell mittels einer an dem Magazinsgestell angeordneten Magazinantriebsvorrichtung in Richtung der Drehachse in die Übergabepositionen bewegbar ist. Diese Gestaltung hat den Vorteil, dass mit dem Magazin immer die gleiche Übergabeposition angefahren werden kann, wobei die Übergabeposition die Ruheposition der Füllplatte sein kann. Entsprechend wird auch nur eine im Bereich der einen Übergabeposition wirksame Fördereinrichtung benötigt, um den jeweiligen Füllring in die zentrische Lage unter der Füllplatte zu schieben.

Bei bewegbarem Magazingestell hat es sich weiterhin als vorteilhaft erwiesen, wenn das Anschließen der in der Übergabeposition angeordneten Magazinführung an die Füllplattenführung mittels einer zwischen diesen angeordneten Zwischenführung erfolgt, die an dem feststehenden Maschinengestell befestigt ist. Die somit feststehende Zwischenführung verringert die Toleranzanforderungen an die Ausrichtung der bewegbaren Führungen an den Anschlussstellen und ermöglicht einen größeren Abstand zwischen dem Maschinengestell und der Reifenfüllvorrichtung, so dass genügend Raum für die Radzuführung, die Mittel zur Radaufnahme und Radzentrierung, sowie für die Bewegung der Füllplatte zur Verfügung steht.

Nach einem weiteren Vorschlag der Erfindung können die Führungen für die Füllringe jeweils zwei parallele Führungsschienen aufweisen und die Füllringe mit einem Rahmen versehen sein, der auf einander entgegengesetzten Seiten drehbar gelagerte Rollen oder Gleitschuhe aufweist, die mit den Führungsschienen eine formschlüssige Führung bilden. Vorzugsweise haben die Führungen für die Füllringe Führungsschienen mit U-förmigem Profil, wobei die beiden hohlen Profilseiten der Führungsschienen einander zugekehrt sind und die Rollen oder Gleitschuhe an den hohlen Profilseiten in die Führungsschienen eingreifen, wenn der Rahmen zwischen den Führungsschienen angeordnet ist. Die Gestaltung der Führungen gewährleistet eine sichere Abstützung und leichtgängige Bewegbarkeit der Füllringe.

Die Fördervorrichtung zum Transportieren der Füllringe aus dem Magazin in die Arbeitsposition unter der Füllplatte kann nach der Erfindung an dem Maschinengestell angeordnet sein und einen Treibkopf antreiben, der an einer zu den Magazinführungen parallelen Treibkopfführung bewegbar geführt und mit einem Füllring kuppelbar ist, der in der Aufnahme, die sich in der Übergabeposition befindet, angeordnet ist. Verschiedene Linearantriebe kommen für den Antrieb des Treibkopfes in Betracht. Besonders vorteilhaft ist es, wenn die Fördervorrichtung ein Kurbelgetriebe mit einer durch einen Motor antreibbaren Kurbel und einer Kuppelstange aufweist, welche die Drehbewegung der Kurbel auf einen Treibkopf überträgt. Diese Gestaltung der Fördervorrichtung ermöglicht eine schnelle Verschiebung des jeweiligen Füllrings aus der einen in die andere Endposition in den Führungen, wobei das Kurbelgetriebe eine harmonische und ruckfreie Änderung der Kräfte zum Beschleunigen und Verzögern des geförderten Füllrings bewirkt.

Der Treibkopf der Fördervorrichtung kann nach der Erfindung ein Kupplungselement aufweisen, das mit an den Füllringen angebrachten Gegenkupplungselementen zusammenwirkt. Kupplungselement und Gegenkupplungselement sind dabei vorteilhaft so ausgebildet, dass sie durch eine relativ zueinander erfolgende und in Richtung der Drehachse verlaufende Bewegung miteinander in Eingriff gebracht oder voneinander getrennt werden können. Da die Bewegung des Magazingestells und der Füllplatte in Richtung der Drehachse erfolgt, wird der gekuppelte Füllring automatisch von dem Treibkopf entkuppelt, wenn die Füllplatte oder das Magazingestell die Übergabeposition verlassen.

Die Treibkopfführung kann nach der Erfindung vorteilhaft auf der den Magazinführungen abgewandten Außenseite des Magazingestells an einer dem Magazingestell zugewandten Innenseite des Maschinengestells angeordnet sein, so dass die Bewegungsbahn des Treibkopfes außerhalb des Magazingestells verläuft. Zum Kuppeln mit dem Treibkopf können an den Füllringen Mitnehmer befestigt sein, die bei Anordnung der Füllringe in dem Magazin die jeweilige Magazinführung nach außen umgreifen und auf ihrer außerhalb des Magazingestells liegenden Außenseite das Gegenkupplungselement tragen. Diese Gestaltung ermöglicht weiterhin einen Bewegungsraum zwischen dem Magazingestell und dem Maschinengestell, im dem die Kurbel und die Treibkopf und Kurbel miteinander verbindende Kuppelstange angeordnet sein können.

Nach einem weiteren Vorschlag der Erfindung kann das Magazingestell an dem Maschinengestell in einer zur Drehachse parallelen Gestellführung bewegbar geführt sein. Durch eine solche Führung wird der Bewegungsraum des Magazingestells in der zur Drehachse senkrechten Richtung festgelegt und erreicht, dass alle Magazinführungen in ihrer Übergabeposition den gleichen kleinen Abstand zu der sich anschließenden Zwischenführung oder Füllplattenführung haben.

Eine vorteilhafte Magazinantriebsvorrichtung kann nach der Erfindung eine drehend antreibbare, mit Außengewinde versehene Spindel aufweisen, die mit einer an dem Magazingestell drehfest abgestützten, mit Innengewinde versehenen Mutter in Gewindeeingriff ist. Die Spindel kann vertikal hängend angeordnet sein und dazu ausgelegt sein, das Magazingestell zu tragen. Hierzu kann die Spindel in einem Axiallager, das in einer Traverse des Maschinengestells abgestützt ist, axial unbeweglich und drehbar gelagert sein, wobei das Axiallager sowie die Traverse vorteilhaft so angeordnet sind, dass die Mittelachse der Spindel in der Nähe des Schwerpunkts oder im Schwerpunkt des mit Füllringen beladenen Magazingestells verläuft. Durch die schwerpunktnahe Anordnung der Spindel werden Querkräfte und Klemmkräfte in der Gestellführung weitgehend vermieden und eine leichtgängige Bewegbarkeit des Magazingestells erreicht.

Zur Vermeidung von Klemm- und Querkräften in der Führung und an der Spindel kann weiterhin beitragen, das die Abstützung des Axiallagers an der Traverse und die Abstützung der Mutter an einem Querbalken des Magazingestells jeweils über sphärischen Lagerflächen erfolgt, deren Mittelpunkte auf der Mittelachse der Spindel liegen. Hierdurch können sich die Spindel und die Mutter zueinander ausrichten und durch Formänderungen der Gestelle unter Last hervorgerufene Zwangskräfte werden vermieden.

Zur genauen Positionierung des jeweiligen Füllrings gegenüber der Füllplatte kann jeder Füllring wenigstens eine Positionierbohrung haben, in die ein an der Füllplatte angeordneter Stift einführbar ist, wenn der jeweilige Füllring in der zentrischen Lage an der Füllplatte befestigt wird. Es kann auch ein mittels eines Aktors bewegbarer Stift aus der Füllplatte herausfahrbar sein, um die Ausrichtung des Füllrings vor der Befestigung an der Füllplatte zu bewirken.

An der Füllplatte können weiterhin Spannvorrichtungen angeordnet sein, durch welche ein in der zentrischen Lage an der Füllplatte angeordneter Füllring mit seinem ersten Rand gegen die Füllplatte spannbar ist. Durch das Spannen des Füllrings wird sichergestellt, dass der Füllring während der Füllvorgänge und bei der Bewegung der Füllplatte in fester Anlage an der Füllplatte gehalten wird und eine zwischen Füllring und Füllplatte angeordnete Dichtung in allen Betriebszuständen eingespannt bleibt und zuverlässig dichtet.

Die Spannvorrichtungen können auf der dem Füllring abgekehrten Oberseite der Füllplatte angeordnet sein und einen senkrecht zur Füllplatte bewegbaren Spannarm haben, der einen den Rand der Füllplatte überragenden und an seinem Ende abgewinkelten Spannanker untergreift. Vorzugsweise ist der Spannanker jeweils von dem Mitnehmer gebildet, mit dem die Füllringe an den Treibkopf kuppelbar sind.

Die Bewegung der Reifenfüllglocke in Richtung der Drehachse wird nach der Erfindung mit einem am Maschinengestell befestigten hydraulischen Steuerzylinder und zwei parallel zum Steuerzylinder angeordneten und am Maschinengestell befestigten Pneumatikzylindern bewirkt, wobei die Kolbenstange des Steuerzylinders und die Kolbenstangen der Pneumatikzylinder an der Füllplatte befestigt sind, und wobei der Steuerzylinder an einen hydraulischen Steuerkreis angeschlossen ist, mit dem der Weg und die Geschwindigkeit der durch die Pneumatikzylinder erzeugbaren Bewegung der Reifenfüllglocke steuerbar ist. Auf diese Weise wird eine genau Steuerung der mit pneumatischer Energie erzeugten Bewegung der Reifenfüllglocke erreicht. Der hydraulische Steuerzylinder und seine Kobenstange kann außerdem starr mit dem Maschinengestell bzw. der Füllplatte verbunden sein und dadurch eine Parallelverschiebung der Füllglocke sicherstellen.

Die Erfindung wird nachfolgend anhand eines Ausführungsbeispiels näher erläutert, das in der Zeichnung dargestellt ist. Es zeigen
- Figur 1: eine perspektivische Ansicht einer Reifenfüllvorrichtung nach der Erfindung,
- Figur 2: eine Ansicht von oben der Reifenfüllvorrichtung gemäß Figur 1,
- Figur 3: eine isolierte perspektivische Ansicht der Führungen der Reifenfüllvorrichtung gemäß Figur 1,
- Figur 4: einen Querschnitt entlang der Linie A-A in Figur 2 der Reifenfüllvorrichtung gemäß Figur 1,
- Figur 5: eine perspektivische Ansicht der isoliert dargestellten Fördervorrichtung der Reifenfüllvorrichtung gemäß Figur 1,
- Figur 6: eine die Füllplatte von oben zeigende Detailansicht der Reifenfüllvorrichtung,
- Figur 7: eine vergrößerte Ansicht des Ausschnitts X gemäß Figur 6,
- Figur 8: eine Teilansicht der Reifenfüllvorrichtung mit einem Querschnitt durch die Füllglocke entlang der Linie B-B in Figur 2,
- Figur 9: eine vergrößerte Darstellung des Ausschnitts Y in Figur 8 und
- Figur 10: eine vergrößerte Darstellung eines Querschnitts entlang der Linie C-C im Bereich des Ausschnitts X in Figur 6.

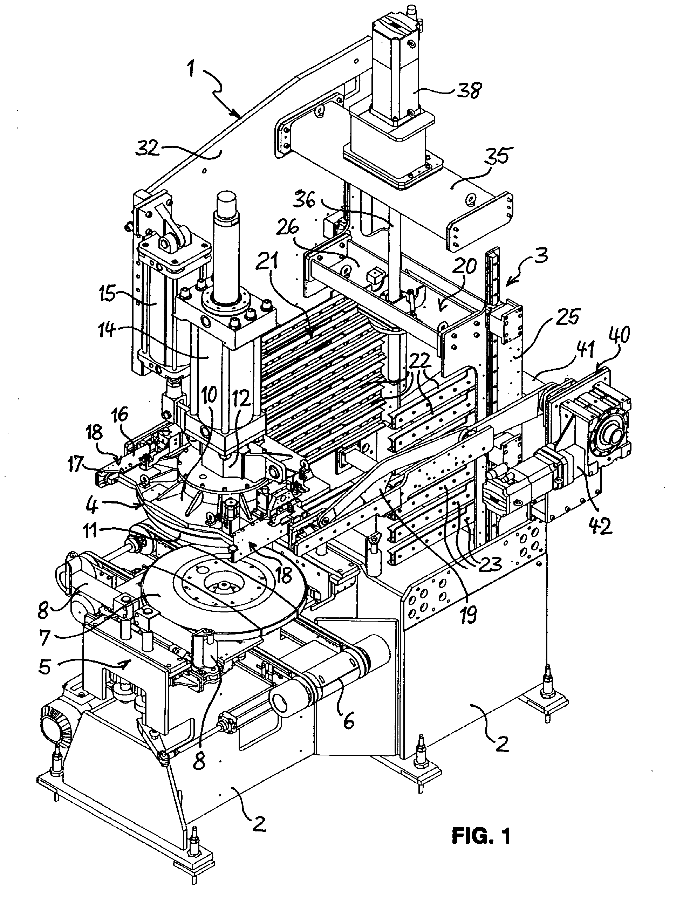

Figur 1 zeigt eine Reifenfüllvorrichtung 1 mit einem Maschinengestell 2, dessen in Blickrichtung vordere Seitenwand entfernt ist, um Einzelheiten eines dahinter liegenden Magazins 3 sichtbar zu machen. Die Reifenfüllvorrichtung 1 umfasst eine Reifenfüllglocke 4 und eine Lager- und Dichteinrichtung 5, der ein Rad mit vormontiertem Reifen mittels eine Transporteinrichtung 6 zugeführt und mit einer Seite auf einem plattenförmigen Tisch 7 der Lager- und Dichteinrichtung 5 liegend gelagert wird. Der Reifenfüllvorrichtung 1 vorgeschaltet ist üblicherweise eine Reifenmontierstation, in der der Reifen auf die Radfelge aufgebracht wird.

Die Lager- und Dichteinrichtung 5 und die Transporteinrichtung 6 sind in EP1 125 772 B1 beschrieben, auf deren Inhalt hiermit Bezug genommen wird. Die Lager- und Dichteinrichtung 5 ist mehrteilig aufgebaut. Der plattenförmige Tisch 7 ist in mehrere Teile unterteilt und an dem Maschinengestell 2 abgestützt. Sein Durchmesser größer ist als der Durchmesser der Auflagefläche des größten zu füllenden Reifens. Die Transporteinrichtung 6 weist zwei in einer horizontalen Transportebene in einem Abstand voneinander verlaufende Transportmittel, z.B. Transportketten oder -riemen auf, die an dem Maschinengestell 2 gelagert sind. In der Transportphase wird das Rad in angehobenem Zustand der Transporteinrichtung 6 bei geteiltem Tisch 7 zentrisch unter die Reifenfüllglocke 4 transportiert und dann durch Absenken der Transporteinrichtung 2 auf den Tisch 7 der Lager- und Dichteinrichtung 5 aufgelegt. Die Transporteinrichtung 6 wird dann abgesenkt und der Tisch 7 der Lager- und Dichteinrichtung 3 zur Bildung einer Dichtfläche geschlossen. Nach zentrieren des Rades mittels einer Zentriereinrichtung 8 wird die Reifenfüllglocke 4 mit dem drucklosen Reifen in Kontakt gebracht und der Reifen mit Druckluft gefüllt, die in die Reifenfüllglocke 4 geleitet wird. Nach dem Füllen wird die Reifenfüllglocke 4 von dem Rad abgehoben und das Rad weitertransportiert.

Wie aus Figur 1 zu ersehen, befindet sich die Reifenfüllglocke 4 in zentrischer Lage über der Lager- und Dichteinrichtung 5. Die Reifenfüllglocke 4 besteht im Wesentlichen aus einer Füllplatte 10 mit ebener Unterseite und einem zylindrischen Füllring 11, der lösbar an der Unterseite der Füllplatte 10 befestigt ist und gegen andere Füllringe, die einen anderen Durchmesser haben, auswechselbar ist. Die Füllplatte 10 ist auf ihrer Oberseite mit Versteifungsrippen versehen und mit einem Joch 12 fest verbunden, an dem die Kolbenstangen eines zentral angeordneten hydraulischen Steuerzylinders 14 und zwei zu beiden Seiten des Steuerzylinders 14 angeordneter Pneumatikzylinder 15 befestigt sind. Die Füllplatte 10 hat zwei parallele Ränder, an denen in spiegelbildlicher Anordnung und Ausführung jeweils eine Tragschiene 16 und eine daran befestigte Führungsschiene 17 angebracht ist, die gemeinsam eine Füllplattenführung 18 bilden. Die Führungsschienen 17 haben ein U-förmiges Profil und sind mit ihrer hohlen Profilseite einander zugekehrt. In den Führungsschienen 17 ist der Füllring 11 mittels Rollen gelagert, die an parallelen Längsseiten eines an den Füllring 11 angebrachten Rahmens drehbar befestigt sind.

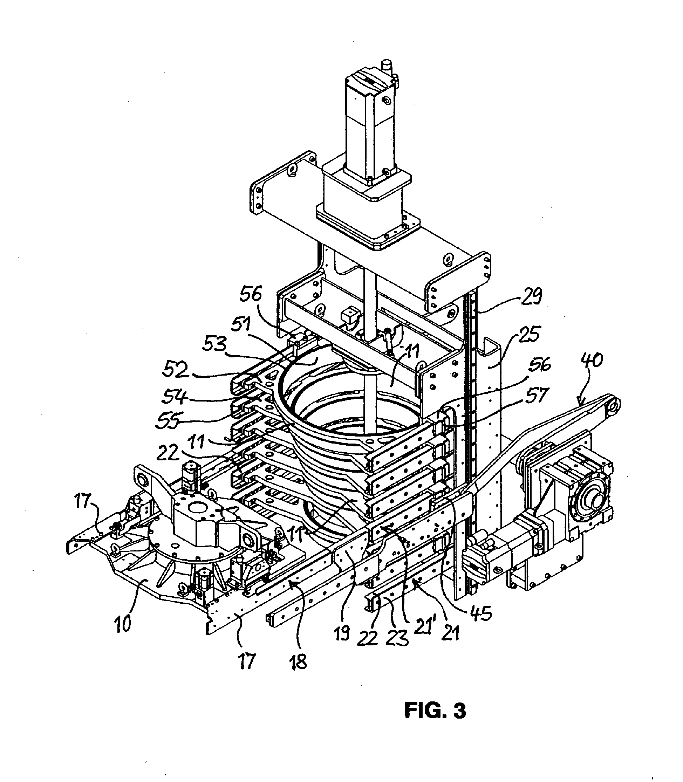

Die Figuren 1 und 3 zeigen die Reifenfüllglocke 4 in einer Ruheposition, in der sich an die Füllplattenführung 18 eine Zwischenführung 19 anschließt, die ebenfalls U-förmige Führungsschienen aufweist und die Füllplattenführung 18 in Richtung des Magazins 3 verlängert. Die Zwischenführung 19 ist fest mit dem Maschinengestell 2 verbunden.

Auf der der Füllplattenführung 18 abgekehrten Seite der Zwischenführung 19 befinden sich in der in Figur 3 gezeigten Stellung die Enden einer in einem Magazingestell 20 angeordneten Magazinführung 21 in einer Übergabeposition an der Zwischenführung 19. Das Magazingestell 20 enthält in paralleler Anordnung übereinander eine Mehrzahl von weiteren Magazinführungen 21, die alle einheitlich ausgebildet sind und jeweils U-förmige Führungsschienen 22 haben, die mit ihren hohlen Profilseiten einander zugekehrt und an Tragschienen 23 befestigt sind. Die Tragschienen 23 sind an den Innenseiten zweier paralleler Gestellwangen 25 angebracht, die durch einen oberen Querbalken und einen unteren Querbalken 27 miteinander verbunden sind. Die Tragschienen 23 sind an ihren hinteren Enden verbreitert und an Gestellwangen 25 des Magazingestells 20 befestigt und erstrecken sich von den Gestellwangen 25 zusammen mit den Führungsschienen 22 frei kragend bis zu einer vertikalen Ebene, die an das dem Magazin 3 zugekehrte Ende der Zwischenführung 19 angrenzt. Durch vertikales Verfahren des Magazingestells 20 können alle Magazinführungen 21 in eine der Zwischenführung 19 unmittelbar gegenüber liegende Übergabeposition gebracht werden.

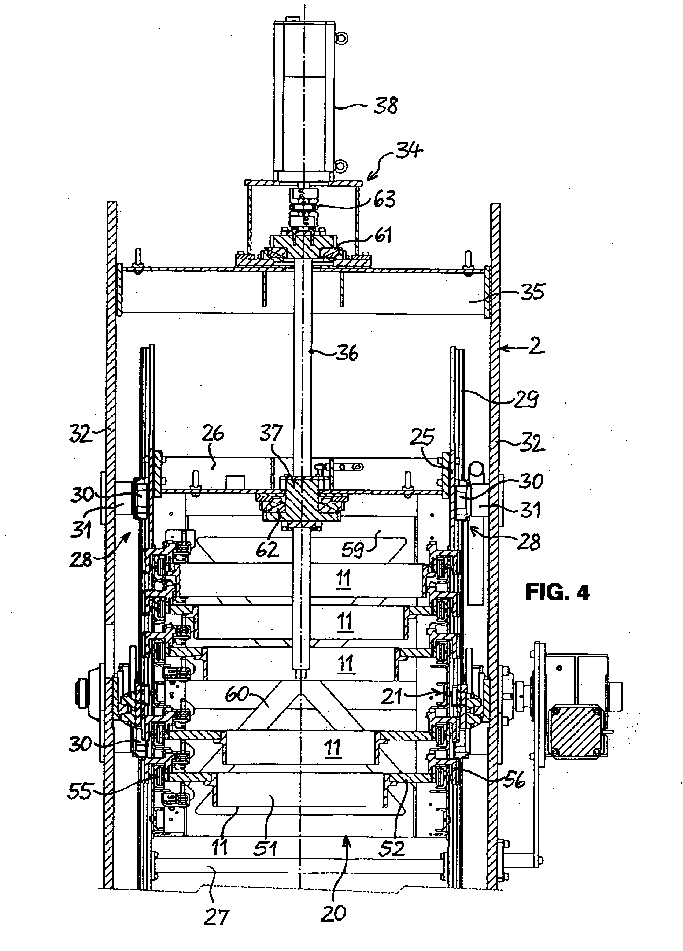

Das Magazingestell 20 ist, wie auch Figur 4 zu entnehmen, an dem Maschinengestell 2 in einer Gestellführung 28 in vertikaler Richtung bewegbar geführt. Die Gestellführung 28 umfasst zwei an den Außenseiten der Gestellwangen 25 befestigte Führungsschienen 29, die sich in vertikaler Richtung erstrecken. Die Führungsschienen 29 sind in Gleitschuhen 30 längs beweglich gelagert, die mittels Distanzkörpern 31 an Seitenwänden 32 des Maschinengestells 2 befestigt sind. Bewegt wird das Magazingestell 20 mit Hilfe einer Magazinantriebsvorrichtung 34, die an einer Traverse 35 des Maschinengestells 2 befestigt ist und eine mit einem Ende an der Traverse 35 drehbar gelagerte und mit Außengewinde versehene Spindel 36 aufweist. Die Spindel 36 ist mit einer an dem Querbalken 26 abgestützten, mit Innengewinde versehenen Mutter 37 in Gewindeeingriff und wird durch einen reversierbaren Motor 38 drehend angetrieben. Die Mutter 37 ist drehfest mit dem Querbalken 26 verbunden.

Um einen Füllring 11 aus dem Magazin 3 unter die Füllplatte 10 oder von der Füllplatte 10 zu dem Magazin 3 zu fördern, ist an dem Magazingestell 20 eine Fördervorrichtung 40 angeordnet. Die Fördervorrichtung 40 besteht im Wesentlichen aus einer Antriebswelle 41, die auf der Rückseite des Magazingestells 20 sich horizontal erstreckt und an den Seitenwänden 32 des Maschinengestells 2 drehbar gelagert ist. An der Außenseite des Maschinengestells 2 ist ein reversierbarer. Getriebemotor 42 angeflanscht, durch den die Antriebswelle 41 drehend antreibbar ist.

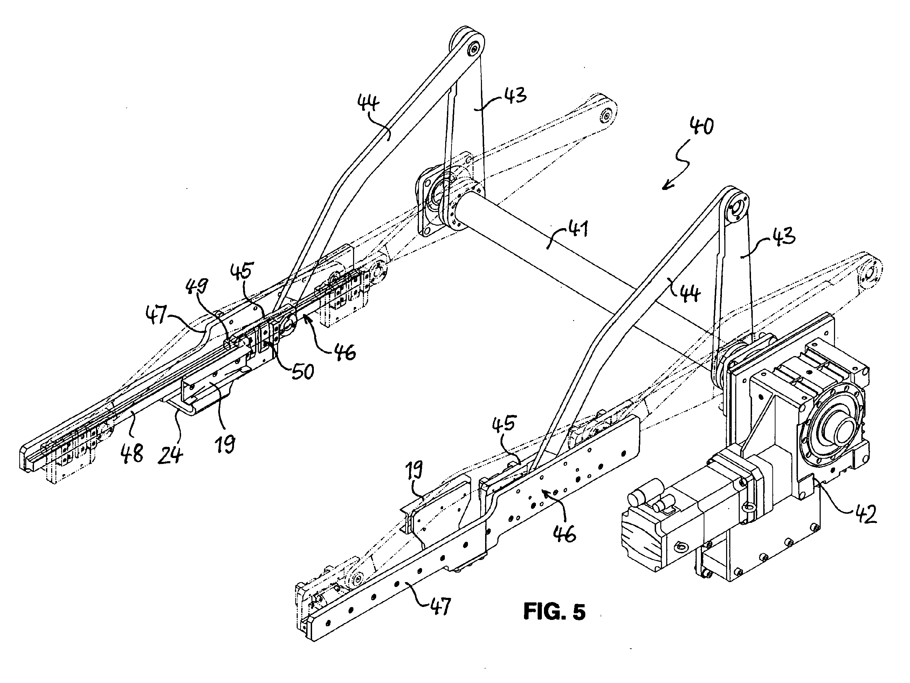

Wie insbesondere in Figur 5 verdeutlicht, weist die Antriebswelle 41 in der Nähe ihrer gelagerten Enden zwei sich gleichsinnig radial erstreckende Kurbeln 43 auf, die an ihren freien Enden drehbar mit Kuppelstangen 44 verbunden sind. Die Kurbeln 43 und die Kuppelstangen 44 bewegen sich jeweils auf der Innenseite der Seitenwände 32 in einem Freiraum, der durch die Distanzkörper 31 zwischen den Seitenwänden 32 und den Führungsschienen 29 der Gestellführung 28 gebildet ist. Die von den Kurbeln 43 entfernten Enden der Kuppelstangen 44 sind durch Drehgelenke jeweils mit einem Treibkopf 45 verbunden, der entlang einer Treibkopfführung 46 in einer zu den Magazinführungen 21 und der Füllplattenführung 18 parallelen Richtung bewegbar geführt ist. Die Treibkopfführungen 46 sind an der Innenseite der Seitenwände 32 befestigt und bestehen aus einer Tragschiene 47 und einer an dieser befestigten Führungsschiene 48, die von einem an dem Treibkopf 45 angebrachten Gleitschuh 49 umgriffen wird.

Auf seiner der Treibkopfführung 46 abgekehrten Seite bildet der Treibkopf 45 ein Kupplungselement 50, das zum Ankuppeln an ein Gegenkupplungselement an den Füllringen 11 bestimmt ist. Das Kupplungselement 50 ist so ausgebildet, dass nur Kräfte in Richtung der Treibkopfbewegung auf das Gegenkupplungselement übertragen werden können.

Figur 5 veranschaulicht die von der Fördervorrichtung 40 ausführbaren Bewegungen. Die durchgezogenen Linien zeigen eine mittlere Stellung, bei der sich die Treibköpfe 45 in der Nähe der Zwischenführung 19 befinden. Die Zwischenführung 19 ist in einem Abstand von der Führungsschiene 48 mit einem Winkelstück 24 an der Tragschiene 47 befestigt, damit der Treibkopf 45 die Zwischenführung 19 ungehindert passieren kann. Die strichpunktierten Linien veranschaulichen die beiden Endstellungen der von den Treibköpfen 45 ausführbaren Förderbewegungen. In der gestreckten Endstellung der Kurbeln 43 und Kurbelstangen 44 befinden sich die Treibköpfe 45 an den von der Antriebswelle entfernten Enden der Treibkopfführungen 46 und in einer Mittellage an beiden Seiten der Füllplatte 10. In der anderen Endstellung, in der die Kurbeln 43 und Kuppelstangen 44 nebeneinander liegen, befinden sich die Treibköpfe 45 neben der Mitte der Magazinführungen 21 des Magazins 3, in der die Treibköpfe 45 mit einem im Magazin 3 angeordneten Füllring 11 gekuppelt werden können.

Die Figuren 3 und 4 zeigen das Magazin 3 mit darin angeordneten Füllringen 11. Das Magazin 3 hat sieben übereinander angeordnete Magazinführungen 21, von denen in Figur 3 die sechs oberen jeweils einen Füllring 11 enthalten. In Figur 4 ist die vierte Magazinführung 21 von oben leer. Die einzelnen Füllringe 11 bestehen aus einem zylindrischen Ringkörper 51, der mit seinem oberen Ende in der Bohrung eines Rahmens 52 befestigt ist und an seiner den ersten Rand bildenden, oberen Stirnfläche mit einer ringförmigen Dichtung 53 versehen ist. Die Rahmen 52 sind symmetrisch ausgebildet und haben parallele Schenkel 54, an denen jeweils mehrere, um parallele Achsen drehbar gelagerte Rollen 55 angeordnet sind. Der Abstand, den die auf entgegengesetzten Seiten des Rahmens 52 angeordneten Rollen 55 voneinander haben, ist bei allen Rahmen 52 gleich und an den einheitlichen Abstand der einander gegenüber liegenden Führungsschienen 22 der Magazinführungen 21 derart angepasst, dass die Rollen 55 optimal in die Führungsschienen 22 eingreifen und reibungsarm darin abrollen können.

Etwa in der Mitte der beiden Schenkel 54 der Rahmen 52 ist jeweils ein Mitnehmer 56 befestigt, der die Form eines auf dem Kopf stehenden U hat und die ihm benachbarte Führungsschiene 22 und Tragschiene 23 auf der Oberseite nach außen umgreift. Auf seiner Außenseite weist der Mitnehmer 56 ein sich in Richtung der Füllringachse erstreckendes Gegenkupplungselement 57 auf. Der Mitnehmer 56 weist außerdem auf seiner der Füllringmitte zugekehrten Innenseite eine vorspringende Schulter 58 auf, die einen Spannanker bildet, an dem eine an der Füllplatte 10 angeordnete Spannvorrichtung angreifen kann.

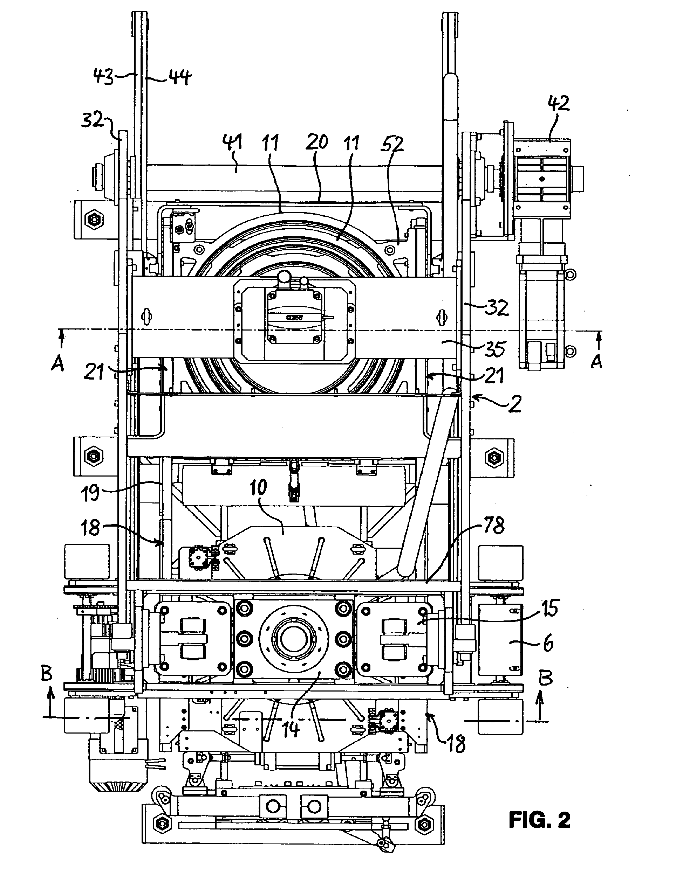

Die Gegenkupplungselemente 57 der Mitnehmer 56 eines Füllrings 11 gelangen in Eingriff mit den Kupplungselementen 50 an den Treibköpfen 45, wenn sich die Treibköpfe 45 der Fördervorrichtung 40, wie in Figur 2 gezeigt, in der hinteren Endstellung befinden und ein Füllring 11 durch vertikale Bewegung des Magazingestells 20 in eine Übergabeposition gebracht wird, in der die ihn aufnehmende Magazinführung 21 der Zwischenführung 19 unmittelbar gegenüberliegt. In Figur 2 trifft dies für die vierte Magazinführung 21' und den vierten Füllring 11' jeweils von oben gezählt zu.

Soll stattdessen der dritte Füllring 11 " von oben von der Fördervorrichtung 40 zur Füllplatte 10 gefördert werden, so muss in der in Figur 2 gezeigten Stellung der Fördervorrichtung 40 das Magazingestell 20 um den Mittenabstand, den die Magazinführungen 21 voneinander haben, gesenkt werden. Hierdurch fahren die Gegenkupplungselemente 57 des vierten Füllrings 11' nach unten aus den Kupplungselementen 50 der Treibköpfe 45 heraus und die Gegenkupplungselemente 57 des darüber liegenden dritten Füllrings 11" gelangen mit den Kupplungselementen 50 der Treibköpfe 45 in Eingriff. Auf analoge Weise kann durch vertikale Bewegung des Magazingestells 20 jeder darin enthaltene Füllring 11 an die Treibköpfe 45 der Fördervorrichtung 40 gekuppelt und dann durch Antreiben der Fördervorrichtung 40 aus der Magazinführung 21 über die Zwischenführung 19 in die Füllplattenführung 18 geschoben werden. Da die Fördervorrichtung 40 gleichzeitig an beiden Schenkeln 54 auf einen geförderten Füllring 11 einwirkt, ist ein leichtgängiges und klemmfreies Verschieben der Füllringe 11 in den Führungen gewährleistet.

Figur 4 zeigt die Anordnung der Füllringe 11 in den Magazinführungen 21 im Magazingestell 20 und die Führung und Abstützung des Maschinengestells 2 an den Seitenwänden 32 des Maschinengestells 2. Das Magazingestell 20 enthält in dieser Darstellung fünf Füllringe 11, die jeweils einen anderen Durchmesser haben und mit an den Schenkeln ihrer Rahmen 52 angeordneten Rollen 55 in Führungsschienen 22 aufgenommen sind. Die in Übergabeposition angeordnete Magazinführung 21 ist leer. Die Führungsschienen 22 sind an Tragschienen 23 abgestützt und befestigt, die jeweils an einer der beiden parallelen Gestellwangen 25 befestigt sind. Querbalken 26, 27 verbinden die Gestellwangen 25 miteinander. Die Gestellwangen 25 sind an der Rückseite des Magazingestells 20 abgewinkelt und durch quer und diagonal verlaufende Streben 59, 60 verbunden, die das Magazingestell 20 zusätzlich stabilisieren.

An der Außenseite der Gestellwangen 25 befinden sich die Führungsschienen 29, die in den Gleitschuhen 30 längsbeweglich geführt sind. Distanzkörper 31 verbinden die Gleitschuhe 30 mit den Seitenwänden 32 des Maschinengestells 2 und sorgen zwischen diesen und dem Magazingestell 20 für einen Freiraum, indem sich die Kurbel und die Kuppelstange der Fördervorrichtung 40 bewegen können. Das Magazingestell 20 wird von der Mutter 37 gehalten, die über ein sphärische Abstützflächen aufweisendes Lager 61 an dem Querbalken 26 abgestützt und drehfest gehalten ist. Die Mutter ist in Gewindeeingriff mit der drehbaren Spindel 36, die über ein Lager 62 mit sphärischen Lagerflächen an der mit den Seitenwänden 32 verbundenen Traverse 35 abgestützt ist. An dem Lager 62 ist die Spindel 36 über ein Axialwälzlager drehbar gelagert und durch eine Kupplung 63 an den ebenfalls an der Traverse 35 befestigten Motor 38 gekuppelt. Durch Drehen der Spindel 36 mit Hilfe des Motors 38 kann das in vertikaler Richtung ausschließlich von der Spindel 36 getragene Magazingestell 20 angehoben oder abgesenkt werden. Die Achse der Spindel 36 befindet sich nahe dem Schwerpunkt des Magazingestells 20, wodurch die Gestellführung belastende Querkräfte minimiert werden.

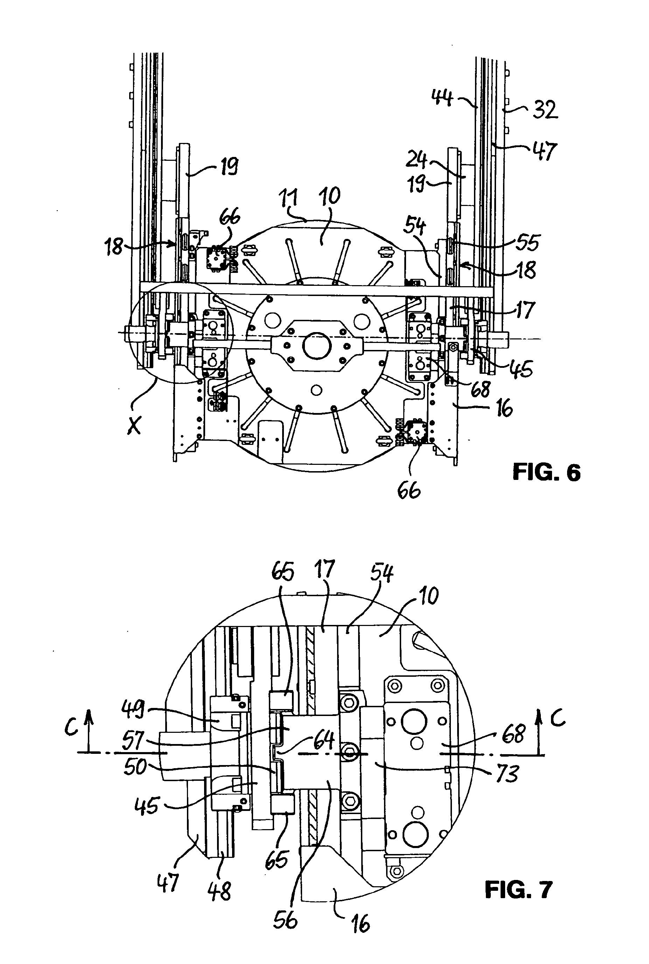

In den Figuren 6 und 7 ist die Fördervorrichtung 40 in der gestreckten Endstellung gezeigt, in der sich ein Füllring 11 in zentrischer Lage unter der Füllplatte 10 befindet. Die mit den Kuppelstangen 44 durch ein Drehgelenk verbundenen Treibköpfe 45 sind mit den Gleitschuhen 49 in den Führungsschienen 48 geführt und mit den Kupplungselementen 50 an die Gegenkupplungselemente 57 der Mitnehmer 56 gekuppelt. Der in Figur 5 von oben gezeigte Mitnehmer 56 ist mittels Schrauben an dem Rahmen 52 des Füllrings 11 befestigt. Das Kupplungselement 50 hat in seiner Mitte einen Schlitz, in den eine von dem Gegenkupplungselement 57 gebildete Rippe 64 eingreift. Außerdem wird das Gegenkupplungselement 57 von vorspringenden Leisten 65, die sich an den beiden Seiten des Kupplungselements 50 befinden, umgriffen.

Der Füllring 11 ist mit den an seinem Rahmen 52 angebrachten Rollen 55 in der Füllplattenführung 18 aufgenommen. Der obere Schenkel der Führungsschiene 17 der Füllplattenführung 18 ist in der Darstellung entfernt, damit die Rollen 55 sichtbar sind. An der Oberseite der Füllplatte 10 sind Aktoren 66 zur Betätigung eines Positionierstifts und durch Aktoren betätigbare Spannvorrichtungen 68 angeordnet, deren Funktionsweise nachfolgend näher erläutert wird.

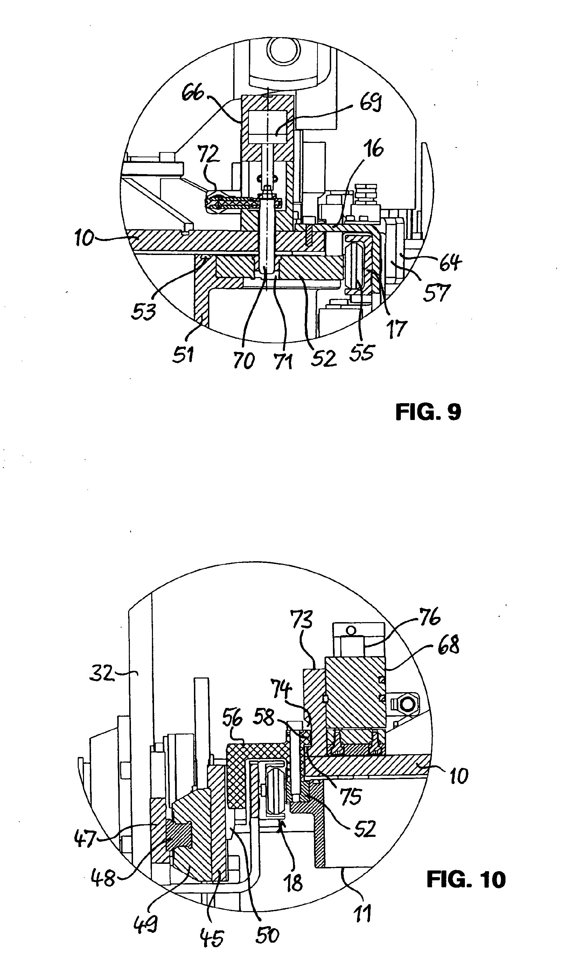

Figur 9 zeigt einen Ausschnitt Y der Füllplatte 10 und des an der Füllplatte 10 angeordneten Füllrings 11 mit einem Abschnitt des Rahmens 52 und einer daran befestigten Rolle 55, die in der Führungsschiene 17 angeordnet ist. Die Führungsschiene 17 ist durch die Tragschiene 16, deren Befestigungsbereich hier im Schnitt gezeigt ist, mit der Füllplatte 10 verbunden. An der dem Füllring 11 abgekehrten Oberseite der Füllplatte 10 ist der Aktor 66 angeordnet, der einen pneumatisch betätigbaren, doppelt wirkenden Kolben 69 zum Bewegen eines Positionierstifts 70 aufweist. Der Positionierstift 70 ist in einer Bohrung in der Füllplatte 10 angeordnet, aus der er, wie in der Zeichnung dargestellt, in der Positionierstellung herausragt und mit seinem Ende in eine Positionierbohrung 71 im Rahmen 52 des Füllrings 11 eingreift. Der Eingriff ist nur möglich, wenn sich der Füllring 11 in zentrischer Lage an der Füllplatte 10 befindet, und wird von einem Sensor erfasst.

Durch einen zweiten, diametral angeordneten Aktor 66, kann der Füllring 11 an einer zweiten Positionierbohrung in analoger Weise gegenüber der Füllplatte 10 ausgerichtet werden. Mittels beider Aktoren 66 ist daher eine eindeutige, formschlüssige Positionierung des Füllrings 11 gegenüber der Füllplatte 10 in der zentrischen Lage gegeben.

Für das Wechseln eines Füllrings 11 werden durch Umsteuern der Aktoren 66 die Positionierstifte 70 in die Bohrungen der Füllplatte 10 zurückgezogen, so dass der jeweilige Füllring 11 ungehindert in der Füllplattenführung 18 gegenüber der Füllplatte 10 verschoben werden kann.

Um eine Abdichtung des Füllrings 11 gegenüber der Füllplatte 10 sicherzustellen und Relativbewegungen zwischen dem Füllring 11 und der Füllplatte 10 während des Betriebs zu vermeiden, wird der Füllring 11 im Anschluss an seine Positionierung durch die Positionierstifte 70 mittels der Spannvorrichtungen 68 gespannt. Die beiden Spannvorrichtungen 68 sind an den den Führungsschienen 17 der Füllplattenführung 18 benachbarten Rändern der Füllplatte 10 mittig angeordnet und befinden sich somit unmittelbar neben den an dem Füllring 11 angeordneten Mitnehmern 56. Jede Spannvorrichtung 68 hat, wie in Figur 10 gezeigt, einen mit dem Rand der Füllplatte 10 fluchtenden Spannarm 73 mit einer auf seiner Außenseite angeordneten, zur Füllplatte 10 parallelen Nut 74, die eine zur Füllplatte 10 parallele Spannfläche 75 bildet. Der Spannarm 73 liegt in einer Lösestellung mit seinem unteren Ende an der Füllplatte 10 an und ist zum Spannen durch pneumatisch betätigbare Aktoren 76 senkrecht zur Füllplatte 10 nach oben bewegbar.

Die den Spannvorrichtungen 68 benachbarten Mitnehmer 56 des Füllrings 11 haben auf ihrer dem Rand der Füllplatte 10 zugekehrten Seite jeweils eine vorspringende Schulter 58, die den Rand der Füllplatte 10 in einem Abstand überragt und in die Nut 74 des Spannarms 73 der Spannvorrichtung 68 eingreift. Wird die Spannvorrichtung 68 betätigt, so wird die Schulter 58 von der Spannfläche 75 erfasst und der Mitnehmer 56 von dem Spannarm 73 in seiner Bewegung mitgenommen. Auf diese Weise wird der mit dem Mitnehmer 56 fest verbundene Füllring 11 mit seinem die Dichtung 73 enthaltenden ersten Rand gegen die Füllplatte 10 gezogen und dadurch fest mit der Füllplatte 10 verspannt. Die Aktoren der Spannvorrichtung 68 bleiben während des Betriebs der Füllglocke in Spannstellung und werden nur zum Auswechseln des Füllrings 11 gelöst.

Vor dem Festspannen befindet sich der mit der Dichtung 53 versehene erste Rand des Füllrings 11 in einem geringen Abstand von der Füllplatte 10. Dieser Abstand ist vorteilhaft, damit die Dichtung 53 beim Zu- und Abführen des Füllrings 11 nicht die Füllplatte 10 berührt oder streift und dadurch beschädigt werden kann. Beim Spannen wird daher der Füllring 11 um einen dem Abstand entsprechenden Spannweg zur Füllplatte 10 hin verschoben. Diesen Spannweg müssen auch die Rollen 55 in den Führungsschienen 17 der Füllplattenführung 18 ausführen können. Die Führungsschienen 17 der Füllplattenführung 18 haben daher insgesamt oder zumindest in dem Bereich, in dem sich die Rollen 55 in der zentrischen Lage befinden, ein entsprechendes Übermaß oder Vertiefungen im U-Profil, so dass die Rollen 55 das Festspannen des Füllrings 11 nicht behindern können.

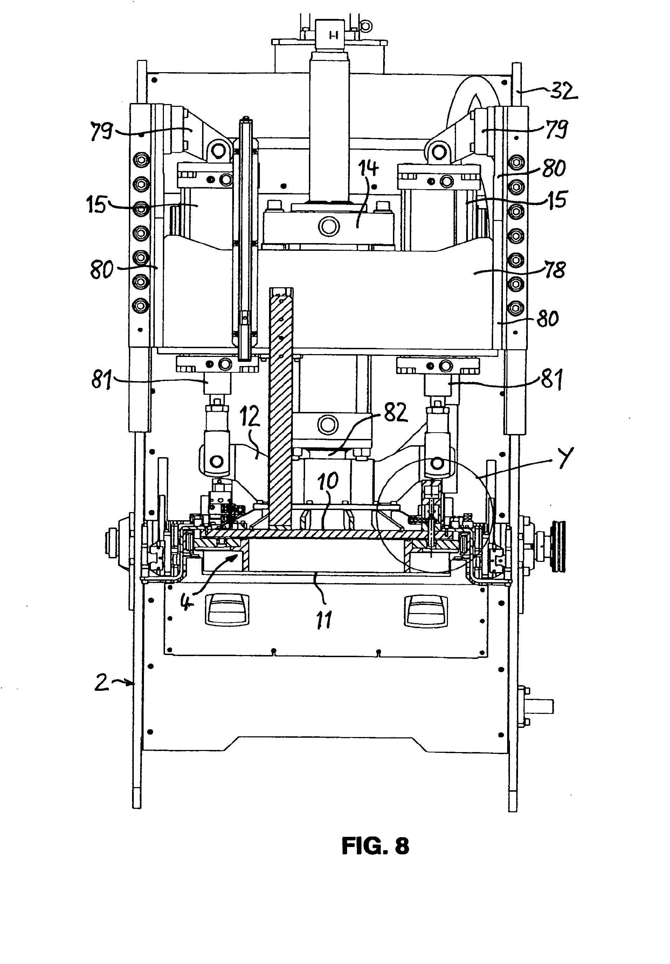

Figur 8 zeigt die Anordnung des Steuerzylinders 14 und der beiden Pneumatikzylinder 15 im oberen Teil der Reifenfüllvorrichtung 1. Der zentral angeordnete Steuerzylinder 14 ist an einem Brückenträger 78 befestigt, der die beiden Seitenwände 32 miteinander verbindet. Der kastenförmige Brückenträger 78 weist auf beiden Seiten des Steuerzylinders 14 Öffnungen auf, durch die sich die Pneumatikzylinder 15 erstrecken. An ihren oberen Enden sind die Pneumatikzylinder 15 durch Gelenke mit Zylinderstützen 79 verbunden, die an den Seitenwänden 32 und über Ankerplatten 80 an dem Brückenträger 78 befestigt sind. Die Kolbenstangen 81 der Pneumatikzylinder 15 sind durch Gelenke mit den Enden des an der Füllplatte befestigten Jochs 12 verbunden. Durch die gelenkige Aufhängung der Pneumatikzylinder 15 und ihrer Kolbenstangen 81 passen sich die Pneumatikzylinder 15 den Bewegungen der Füllplatte 10 an, so dass Zwangskräfte vermieden werden. Die Kolbenstange 82 des Steuerzylinders 14 ist biegesteif mit dem Joch 12 verbunden und bildet auf diese Weise eine axiale Führung für die aus Füllplatte 10 und Füllring 11 gebildete Füllglocke. Die Achse des Steuerzylinders 14 befindet sich im Zentrum der zentrischen Lage der Füllringe 11 und fällt mit der Drehachse eines auf der Lager- und Dichteinrichtung 5 angeordneten und zentrierten Rades zusammen. Der Steuerzylinder 14 und die Pneumatikzylinder 15 sind doppelt wirkend. Zum Bewegen der Reifenfüllglocke 4 werden die Pneumatikzylinder 15 in der einen oder anderen Bewegungsrichtung mit Druckluft beaufschlagt. Der Steuerzylinder 14 ist an einen hydraulischen Steuerkreis angeschlossen und dient zur Steuerung der Bewegung der Reifenfüllglocke 4, indem er der Kraft der Pneumatikzylinder 15 entgegenwirkt. Mit dem hydraulischen Steuerkreis ist eine exakte Positionierung der Reifenfüllglocke 4 an dem zu füllenden Reifen und auch eine Steuerung der Bewegungsgeschwindigkeit der Reifenfüllglocke 4 möglich.

Die beschriebene Reifenfüllvorrichtung eignet sich aufgrund der großen Zahl von bis zu sieben Füllringen, die verschiedene Durchmesser haben, zum Füllen der Reifen eines großen Spektrums von Rädern mit verschiedenen Felgendurchmessern. Insbesondere bei modernen Niederquerschnittsreifen ist eine besonders genaue Anpassung des Füllringdurchmessers an den Ringdurchmessen notwendig, so dass bekannte Reifenfüllvorrichtungen mit nur zwei oder drei Füllringen den Anforderungen nicht mehr genügen. Durch die Gestaltung des Magazins ist der Platzbedarf der Reifenfüllvorrichtung klein und von der Anzahl der zur Verfügung stehenden Füllringe allenfalls in der Bauhöhe des Magazins abhängig. Die Reifenfüllvorrichtung ist wartungsfreundlich, da empfindliche und verschleißbehaftete Bauteile und Dichtungen gut zugänglich und leicht sind und ausgewechselt werden können. Die Förderung der Füllringe zur Füllplatte und zurück erfolgt auf eine genaue und zuverlässige Weise und ermöglicht durch die Robustheit der Fördervorrichtung hohe Fördergeschwindigkeiten und damit kurze Zeiten für den jeweiligen Wechsel der Füllringe. Die Gestaltung der Magazinantriebsvorrichtung und der Gestellführung vermeidet Zwangskräfte und erlaubt eine genaue Einstellung der Übergabepositionen. Schließlich zeichnet sich die beschriebene Reifenfüllvorrichtung durch einfache und kostengünstige Herstellbarkeit aus.

## Patentansprüche

1. Reifenfüllvorrichtung, der ein aus einer Radfelge und einem auf die Radfelge montierten schlauchlosen Reifen bestehendes Rad zuführbar ist, mit einem Maschinengestell (2), einer an dem Maschinengestell (2) angeordneten Reifenfüllglocke (4) und einer Lager- und Dichteinrichtung (5) zur Abdichtung eines Füllraums, wobei die Reifenfüllglocke (4) aus einer Füllplatte (10) und einem separaten Füllring (11) zusammengesetzt ist, der aus mehreren gegeneinander auswechselbaren Füllringen (11, 11') unterschiedlichen Durchmessers auswählbar und in eine zur Drehachse des Rades zentrische Lage bewegbar ist, wobei die Füllplatte (10) und ein erster Rand eines in der zentrischen Lage angeordneten Füllrings (11) aneinander anlegbar sind und die Füllplatte (10) gemeinsam mit dem Füllring (11) längs der Drehachse bewegbar ist und wobei ein der Füllplatte (10) abgekehrter zweiter Rand des in der zentrischen Lage angeordneten Füllrings (11) gegen eine Seitenfläche des Reifens anlegbar ist, und mit einem Magazin (3), das ein Magazingestell (20) mit in mehreren parallelen, die Drehachse schneidenden Ebenen liegenden, von Magazinführungen (21) gebildeten Aufnahmen aufweist, wobei jede der Aufnahmen einen Füllring (11, 11') in der Magazinführung (21) bewegbar gelagert aufnehmen kann und wobei das Magazingestell (20) oder die Füllplatte (10) in Richtung der Drehachse in eine oder mehrere Übergabepositionen bewegbar sind, **dadurch gekennzeichnet, dass** in jeder Übergabeposition die Magazinführung (21) jeweils einer der Aufnahmen an eine an der Füllplatte (10) angeordnete Füllplattenführung (18) angeschlossen ist, und ein Füllring (11), der sich in der in der Übergabeposition angeordneten Magazinführung (21) befindet, durch eine Fördervorrichtung (40) in die Füllplattenführung und die zentrische Lage an der Füllplatte (10) förderbar ist.

2. Reifenfüllvorrichtung nach Anspruch 1, **dadurch gekennzeichnet, dass** das Magazingestell (20) mittels einer an dem Maschinengestell (2) angeordneten Magazinantriebsvorrichtung (34) in Richtung der Drehachse in die Übergabepositionen der Magazinführungen (21) bewegbar ist.

3. Reifenfüllvorrichtung nach einem der Ansprüche 1 oder 2, **dadurch gekennzeichnet, dass** das Anschließen der in Übergabeposition angeordneten Magazinführung (21) an die Füllplattenführung (18) mittels einer Zwischenführung (19) erfolgt, die an dem Maschinengestell (2) befestigt ist.

4. Reifenfüllvorrichtung nach einem der vorhergehenden Ansprüche, **dadurch gekennzeichnet, dass** die Führungen für die Füllringe (11) jeweils zwei parallele Führungsschienen (17, 22) aufweisen und dass die Füllringe (11, 11') mit einem Rahmen (52) versehen sind, der auf einander entgegengesetzten Seiten drehbar gelagerte Rollen (55) oder Gleitschuhe aufweist, die mit den Führungsschienen (17, 22) eine formschlüssige Führung bilden.

5. Reifenfüllvorrichtung nach Anspruch 4, **dadurch gekennzeichnet, dass** die Führungsschienen (17, 22) ein U-förmiges Profil haben, wobei die hohlen Profilseiten der Führungsschienen (17, 22) einander zugekehrt sind und dass die Rollen (55) oder Gleitschuhe in die hohlen Profilseiten eingreifen, wenn der Rahmen eines Füllrings (11) zwischen den Führungsschienen (17, 22) angeordnet ist.

6. Reifenfüllvorrichtung nach einem der vorhergehenden Ansprüche, **dadurch gekennzeichnet, dass** die Fördervorrichtung (40) an dem Maschinengestell (2) angeordnet ist und einen Treibkopf (45) antreibt, der an einer zu den Magazinführungen (21) parallelen Treibkopfführung (46) bewegbar geführt und mit einem Füllring (11) kuppelbar ist, der in der Aufnahme, die sich in der Übergabeposition befindet, angeordnet ist.

7. Reifenfüllvorrichtung nach Anspruch 6, **dadurch gekennzeichnet, dass** die Fördervorrichtung ein Kurbelgetriebe mit einer durch einen Motor (42) antreibbaren Kurbel (43) und einer Kuppelstange (44) aufweist, welche die Drehbewegung der Kurbel (43) auf den Treibkopf (45) überträgt, die Kurbel (43) und die Kuppelstange (44) in einem freien Bewegungsraum zwischen dem Magazingestell (20) und dem Maschinengestell (2) angeordnet sind..

8. Reifenfüllvorrichtung nach einem der Ansprüche 6 oder 7, **dadurch gekennzeichnet, dass** der Treibkopf (45) ein Kupplungselement (50) aufweist, das mit an den Füllringen (11, 11') angebrachten Gegenkupplungselementen (57) zusammenwirkt und dass das Kupplungselement (50) und das Gegenkupplungselement (57) so ausgebildet sind, dass sie durch eine relativ zueinander erfolgende Bewegung in Richtung der Füllringachse miteinander in Eingriff gebracht oder voneinander getrennt werden können.

9. Reifenfüllvorrichtung nach einem der Ansprüche 6 bis 8, **dadurch gekennzeichnet, dass** die Treibkopfführung (46) auf einer den Magazinführungen (21) abgewandten Außenseite des Magazingestells (20) an einer dem Magazingestell (20) zugewandten Innenseite des Maschinengestells (2) angeordnet ist und dass an den Füllringen (11, 11') Mitnehmer (56) befestigt sind, die bei Anordnung der Füllringe (11, 11') in dem Magazin (3) die Magazinführungen (21) nach außen umgreifen und auf ihrer Außenseite das Gegenkupplungselement (57) tragen.

10. Reifenfüllvorrichtung nach einem der Ansprüche 2 bis 9, **dadurch gekennzeichnet, dass** das Magazingestell (20) an dem Maschinengestell (2) in einer Gestellführung (28) bewegbar geführt ist und dass die Magazinantriebsvorrichtung (34) eine drehend antreibbare, mit Außengewinde versehene Spindel (36) aufweist, die mit einer an dem Magazingestell (20) drehfest abgestützten, mit Innengewinde versehenen Mutter (37) in Gewindeeingriff ist.

11. Reifenfüllvorrichtung nach Anspruch 10, **dadurch gekennzeichnet, dass** die Spindel (36) vertikal hängend angeordnet ist und das Magazingestell (20) trägt, wobei die Spindel (36) in einem an einer Traverse (35) des Maschinengestells abgestützten Axiallager axial unbeweglich und drehbar gelagert ist und das Axiallager sowie die Traverse (35) so angeordnet sind, dass die Mittelachse der Spindel (36) in der Nähe des Schwerpunkts oder im Schwerpunkt des mit Füllringen (11, 11') beladenen Magazingestells (20) verläuft.

12. Reifenfüllvorrichtung nach Anspruch 11, **dadurch gekennzeichnet, dass** das Axiallager der Spindel (36) an der Traverse (35) und die Mutter (37) an einem Querbalken (27) des Magazingestells (20) jeweils mittels sphärischen Lagerflächen abgestützt sind, deren Mittelpunkte auf der Mittelachse der Spindel (36) liegen.

13. Reifenfüllvorrichtung nach einem der vorhergehenden Ansprüche, **dadurch gekennzeichnet, dass** die Füllringe (11, 11') wenigstens eine Positionierbohrung (71) haben, in die ein an der Füllplatte (10) mittels eines Aktors (66) bewegbarer Positionierstift (70) einführbar ist, wenn sich einer der Füllringe (11) in der zentrischen Lage an der Füllplatte (10) befindet.

14. Reifenfüllvorrichtung nach Anspruch 13, **dadurch gekennzeichnet, dass** an dem Aktor (66) ein Sensor (72) angeordnet ist, der die Stellung des Positionierstifts (70) erfasst.

15. Reifenfüllvorrichtung nach einem der vorhergehenden Ansprüche, **dadurch gekennzeichnet, dass** an der Füllplatte (10) Spannvorrichtungen (68) angeordnet sind, durch welche ein in der zentrischen Lage an der Füllplatte (10) angeordneter Füllring (11) mit seinem ersten Rand gegen die Füllplatte (10) spannbar ist.

16. Reifenfüllvorrichtung nach Anspruch 15, **dadurch gekennzeichnet, dass** die Spannvorrichtungen (68) auf der dem Füllring (11) abgekehrten Oberseite der Füllplatte (10) angeordnet sind einen senkrecht zur Füllplatte (10) bewegbaren Spannarm (73) haben, der eine Schulter (58) eines den Rand der Füllplatte (10) überragenden, abgewinkelten Spannankers des Füllrings untergreift.

17. Reifenfüllvorrichtung nach Anspruch 16, **dadurch gekennzeichnet, dass** der Spannanker von dem Mitnehmer (56) des Füllrings (11) gebildet ist.

18. Reifenfüllvorrichtung nach einem der vorhergehenden Ansprüche, **dadurch gekennzeichnet, dass** zum Bewegen der Reifenfüllglocke (4) zwei Pneumatikzylinder (15) und ein hydraulischer Steuerzylinder (14) in paralleler Anordnung an dem Maschinengestell (2) befestigt sind, deren Kolbenstangen (81, 82) mit der Füllplatte (10) verbunden sind und dass die Bewegung der Pneumatikzylinder (15) mit Hilfe des Steuerzylinders (14) steuerbar ist.

## Claims

1. Tyre inflation device to which a wheel comprising a wheel rim and a tubeless tyre fitted to the wheel rim can be supplied, having a machine frame (2), a tyre filling bell (4) arranged on the machine frame (2), and a supporting and sealing device (5) for sealing a filling chamber, the tyre filling bell. (4) comprising a filling plate (10) and a separate filling ring (11) which can be selected from a plurality of mutually interchangeable filling rings (11, 11') with different diameters, and which can be moved into a centred position with respect to the axis of rotation of the wheel, the filling plate (10) and a first edge of a filling ring (11) located in the centred position being able to be applied to each other and the filling plate (10) being able to be moved along the axis of rotation together with said filling ring (11), and a second edge of the filling ring (11) located in the centred position facing away from the filling plate (10) being able to be applied against a side face of the tyre, and having a magazine (3) comprising a magazine rack (20) having holders formed from magazine guides (21) lying in a plurality of parallel planets interjecting the axis of rotation, each of the holders being able to hold a filling ring (11, 11') in the magazine guide (21) such that they are mounted to permit movement, and the magazine rack (20) or the filling plate (10) being able to be moved in the direction of the axis of rotation into one or a plurality of transfer positions, **characterised in that** in each transfer position the magazine guide (21) of each of the holders is connected to a filling plate guide (18) located on the filling plate (10), and a filling ring (11), which is located in the magazine guide (21) arranged in the transfer position, can be conveyed by a conveying device (40) into the filling plate guide and into the centred position on the filling plate (10).

2. Tyre inflation device according to claim 1, **characterised in that** the magazine rack (20) can be moved in the direction of the axis of rotation into the transfer position of the magazine guides (21) by means of a magazine drive device (34) arranged on the machine frame (2).

3. Tyre inflation device according to either claim 1 or claim 2, **characterised in that** the magazine guide (21) arranged in the transfer position is connected to the filling plate guide (18) by means of an intermediate guide (19) that is fixed to the machine frame (2).

4. Tyre inflation device according to any of the preceding claims, **characterised by** guides for the filling rings (11), each guide comprising two parallel guide rails (17, 22), wherein the filling rings (11, 11') are equipped with a frame (52) which comprises rotatably mounted rollers (55) or sliding blocks on opposite sides to each other which form a positive guide with the guide rails (17, 22).

5. Tyre inflation device according to claim 4, **characterised in that** the guide rails (17, 22) have a U-shaped profile, the hollow profile sides of the guide rails (17, 22) facing each other and **in that** the rollers (55) or sliding blocks engaging in the hollow profile sides when the frame of a filling ring (11) is positioned between the guide rails (17, 22).

6. Tyre inflation device according to any of the preceding claims, **characterised in that** the conveying device (40) is arranged on the machine frame (2) and drives a drive head (45) which is guided such that it can move on a drive head guide (46) parallel with the magazine guides (21) and can be connected to a filling ring (11) which is arranged in the holder which is in the transfer position.

7. Tyre inflation device according to claim 6, **characterised in that** the conveying device comprises a crank mechanism having a crank (43) driven by a motor (42) and a coupling rod (44), which transfers the rotary motion of the crank (43) to the drive head (45), the crank (43) and the coupling rod (44) are arranged in a free movement area between the magazine rack (20) and the machine frame (2).

8. Tyre inflation device according to either claim 6 or claim 7, **characterised in that** the drive head (45) comprises a coupling element (50) which interacts with the counter-coupling elements (57) arranged on the filling rings (11, 11') and **in that** the coupling element (50) and the counter-coupling element (57) are designed such that they can be engaged with each other or separated from each other as a result of a movement with respect to one another in the direction of the filling ring axis.

9. Tyre inflation device according to any of claims 6 to 8, **characterised in that** the drive head guide (46) is arranged on an outer side of the magazine rack (20) facing away from the magazine guides (21) on an inner side of the machine frame (2) facing the magazine rack (20) and **in that** carriers (56) are fixed to the filling rings (11, 11'), said carriers gripping around the outside of the magazine guides (21) when the filling rings (11, 11') are positioned in the magazine (3) and carrying the counter-coupling element (57) on their outer side.

10. Tyre inflation device according to any of claims 2 to 9, **characterised in that** the magazine rack (20) is guided on the machine frame (2) in a rack guide (28) such that it can move, and **in that** the magazine drive device (34) comprises a spindle (36) which can be driven in rotation and which has an outer thread, said spindle being engaged by its outer thread with a nut (37) having an inner thread and being supported on the magazine rack (20) such that it cannot rotate.

11. Tyre inflation device according to claim 10, **characterised in that** the spindle (36) is suspended vertically and supports the magazine rack (20), said spindle (36) being rotatably mounted and fixed axially in an axial bearing supported on a cross-member (35) of the machine frame, and the axial bearing and the cross-member (35) are arranged such that the central axis of the spindle (36) runs close to the centre of gravity or in the centre of gravity of the magazine rack (20) loaded with filling rings (11, 11').

12. Tyre inflation device according to claim 11, **characterised in that** spherical bearing surfaces support the axial bearing of the spindle (36) on the cross-member (35) and the nut (37) on a cross-beam (27) of the magazine rack (20) in each case, the central points of said bearing surfaces lying on the central axis of the spindle (36).

13. Tyre inflation device according to any of the preceding claims, **characterised in that** the filling rings (11, 11') have at least one positioning hole (71) into which a positioning pin (70) which can be moved on the filling plate (10) by means of an actuator (66) can be inserted if one of the filling rings (11) is in the centred position on the filling plate (10).

14. Tyre inflation device according to claim 13, **characterised in that** a sensor (72) is arranged on the actuator (66) and records the position of the positioning pin (70).

15. Tyre inflation device according to any of the preceding claims, **characterised in that** clamping devices (68) are arranged on the filling plate (10), which clamping devices (68) are capable to clamp a filling ring (11) arranged in the centred position on the filling plate (10) against the filling plate (10) by means of its first edge.

16. Tyre inflation device according to claim 15, **characterised in that** the clamping devices (68) are arranged on the upper side of the filling plate (10) facing away from the filling ring (11) and have a clamping arm (73) which can be moved perpendicular to the filling plate (10), said clamping arm gripping beneath a shoulder (58) of an angled clamping anchor of the filling ring protruding over the edge of the filling plate (10).

17. Tyre inflation device according to claim 16, **characterised in that** the clamping anchor is formed by the carrier (56) of the filling ring (11).

18. Tyre inflation device according to any of the preceding claims, **characterised in that** two pneumatic cylinders (15) and one hydraulic control cylinder (14) are fixed to the machine frame (2) in a parallel arrangement in order to move the tyre filling bell (4), the piston rods (81, 82) of said control cylinder and said pneumatic cylinders being connected to the filling plate (10), and **in that** the movement of the pneumatic cylinders (15) can be controlled by the control cylinder (14).

## Revendications

1. Dispositif de gonflage de pneumatiques, auquel peut être amenée une roue constituée d'une jante et d'un pneumatique sans chambre à air monté sur ladite jante, ledit dispositif comprenant un bâti de machine (2), une cloche de gonflage de pneumatiques (4) disposée sur le bâti de machine (2) et une unité de support et d'étanchéité (5) destinée à rendre étanche un espace de gonflage, la cloche de gonflage de pneumatiques (4) étant composée d'une plaque de gonflage (10) et d'une bague de gonflage (11) séparée qui peut être sélectionnée parmi plusieurs bagues de gonflage (11, 11') interchangeables de différents diamètres et qui peut être déplacée dans une position centrée par rapport à l'axe de rotation de la roue, la plaque de gonflage (10) et un premier bord d'une bague de gonflage (11) disposée dans la position centrée pouvant être mis en appui l'un contre l'autre et la plaque de gonflage (10) pouvant être déplacée conjointement avec la bague de gonflage (11) le long de l'axe de rotation, et un deuxième bord de la bague de gonflage (11) disposée dans la position centrée pouvant être mis en appui contre une surface latérale du pneumatique, ledit deuxième bord étant opposé à la plaque de gonflage (10), ledit dispositif de gonflage de pneumatiques comprenant également un magasin (3) qui comprend un bâti de magasin (20) pourvu de logements formés par des guides de magasin (21), lesdits logements étant situés dans plusieurs plans parallèles croisant l'axe de rotation, chacun des logements pouvant loger une bague de gonflage (11, 11') logée mobile dans le guide de magasin (21), et le bâti de magasin (20) ou la plaque de gonflage (10) pouvant être déplacé en direction de l'axe de rotation dans une ou plusieurs positions de transfert, **caractérisé en ce que** dans chaque position de transfert, le guide de magasin (21) d'un des logements est raccordé à un guide de plaque de gonflage (18) disposé sur la plaque de gonflage (10), et une bague de gonflage (11) qui se situe dans le guide de magasin (21) disposé dans la position de transfert peut être transportée par un dispositif de transport (40) dans le guide de plaque de gonflage et la position centrée sur la plaque de gonflage (10).

2. Dispositif de gonflage de pneumatiques selon la revendication 1, **caractérisé en ce que** le bâti de magasin (20) peut être déplacé en direction de l'axe de rotation dans les positions de transfert des guides de magasin (21) au moyen d'un dispositif d'entraînement de magasin (34) disposé sur le bâti de machine (2).

3. Dispositif de gonflage de pneumatiques selon la revendication 1 ou 2, **caractérisé en ce que** le raccordement du guide de magasin (21) disposé dans la position de transfert au guide de plaque de gonflage (18) est réalisé au moyen d'un guide intermédiaire (19) qui est fixé au bâti de machine (2).

4. Dispositif de gonflage de pneumatiques selon l'une des revendications précédentes, **caractérisé en ce que** les guides pour les bagues de gonflage (11) comportent chacun deux rails de guidage (17, 22) parallèles, et **en ce que** les bagues de gonflage (11, 11') sont pourvues d'un cadre (52) qui comporte des galets (55) ou des patins montés en rotation sur des faces opposées l'une à l'autre, lesquels forment avec les rails de guidage (17, 22) un guidage par coopération de formes.

5. Dispositif de gonflage de pneumatiques selon la revendication 4, **caractérisé en ce que** les rails de guidage (17, 22) présentent un profil en U, les faces creuses du profilé des rails de guidage (17, 22) étant tournées l'une vers l'autre, et **en ce que** les galets (55) ou les patins coulissants s'insèrent dans les faces de profilé creuses lorsque le cadre d'une bague de gonflage (11) est disposé entre les rails de guidage (17, 22).

6. Dispositif de gonflage de pneumatiques selon l'une des revendications précédentes, **caractérisé en ce que** le dispositif de transport (40) est disposé sur le bâti de machine (2) et entraîne une tête d'entraînement (46) qui est guidée mobile sur un guide de tête d'entraînement (46) parallèle aux guides de magasin (21) et qui peut être accouplée à une bague de gonflage (11) disposée dans le logement qui se situe dans la position de transfert.

7. Dispositif de gonflage de pneumatiques selon la revendication 6, **caractérisé en ce que** le dispositif de transport comporte un mécanisme à manivelle pourvu d'une manivelle (43) pouvant être entraînée par un moteur (42) et d'une barre d'accouplement (44) qui transfère le déplacement en rotation de la manivelle (43) à la tête d'entraînement (45), la manivelle (43) et la barre d'accouplement (44) étant disposées dans un espace de déplacement libre entre le bâti de magasin (20) et le bâti de machine (2).

8. Dispositif de gonflage de pneumatiques selon la revendication 6 ou 7, **caractérisé en ce que** la tête d'entraînement (45) comporte un élément d'accouplement (50) qui coopère avec des éléments d'accouplement complémentaires (57) montés sur les bagues de gonflage (11, 11'), et **en ce que** l'élément d'accouplement (50) et l'élément d'accouplement complémentaire (57) sont réalisés de telle manière qu'ils peuvent être mis en prise ou séparés l'un de l'autre à la suite d'un déplacement effectué l'un par rapport à l'autre en direction de l'axe de la bague de gonflage.

9. Dispositif de gonflage de pneumatiques selon l'une des revendications 6 à 8, **caractérisé en ce que** le guide de tête d'entraînement (46) est disposé du côté d'une face extérieure du bâti de magasin (20) opposée aux guides de magasin (21) sur une face intérieure du bâti de machine (2) tournée vers le bâti de magasin (20) et **en ce que** des entraîneurs (56) sont fixés sur les bagues de gonflage (11, 11'), lesquels entraîneurs enserrent les guides de magasin (21) par l'extérieur lorsque les bagues de gonflage (11, 11') sont disposées dans le magasin (3) et portent sur leur face extérieure l'élément d'accouplement complémentaire(57).

10. Dispositif de gonflage de pneumatiques selon l'une des revendications 2 à 9, **caractérisé en ce que** le bâti de magasin (20) est guidé mobile sur le bâti de machine (2) dans un guide de bâti (28), et **en ce que** le dispositif d'entraînement de magasin (34) comporte une broche (36) pouvant être entraînée en rotation et pourvue d'un filet extérieur, ladite broche étant en prise filetée avec un écrou (37) en appui bloqué en rotation sur le bâti de magasin (20) et pourvu d'un filet intérieur.

11. Dispositif de gonflage de pneumatiques selon la revendication 10, **caractérisé en ce que** la broche (36) est disposée verticalement en suspension et porte le bâti de machine (20), la broche (36) étant montée immobile axialement et mobile en rotation dans un palier axial en appui sur une traverse (35) du bâti de machine, et le palier axial ainsi que la traverse (35) étant disposés de telle manière que l'axe central de la broche (36) s'étend à proximité du centre de gravité ou dans le centre de gravité du bâti de magasin (20) chargé avec des bagues de gonflage (11, 11').

12. Dispositif de gonflage de pneumatiques selon la revendication 11, **caractérisé en ce que** le palier axial de la broche (36) est en appui sur la traverse (35) et l'écrou (37) est en appui sur une poutre transversale (27) du bâti de magasin (20) chacun au moyen de surfaces d'appui sphériques dont les centres se situent sur l'axe médian de la broche (36).

13. Dispositif de gonflage de pneumatiques selon l'une des revendications précédentes, **caractérisé en ce que** les bagues de gonflage (11, 11') présentent au moins un trou de positionnement (71) dans lequel peut être introduite une tige de positionnement (70) pouvant être déplacée sur la plaque de gonflage (10) au moyen d'un actionneur (66) lorsque l'une des bagues de gonflage (11) se situe dans la position centrée sur la plaque de gonflage (10).

14. Dispositif de gonflage de pneumatiques selon la revendication 13, **caractérisé en ce qu'**un capteur (72) est disposé sur l'actionneur (66), lequel capteur détecte la position de la tige de positionnement (70).

15. Dispositif de gonflage de pneumatiques selon l'une des revendications précédentes, **caractérisé en ce que** des dispositifs de serrage (68) sont disposés sur la plaque de gonflage (10) au moyen desquels une bague de gonflage (11) disposée dans la position centrée sur la plaque de gonflage (10) peut être serrée avec son premier bord contre la plaque de gonflage (10).

16. Dispositif de gonflage de pneumatiques selon la revendication 15, **caractérisé en ce que** les dispositifs de serrage (68) sont disposés sur la surface de la plaque de gonflage (10) opposée à la bague de gonflage (11) et présentent un bras de serrage (73) mobile perpendiculairement la plaque de gonflage (10), lequel bras saisit par en dessous un épaulement (58) d'une ancre de serrage coudée saillant du bord de la plaque de gonflage (10).

17. Dispositif de gonflage de pneumatiques selon la revendication 16, **caractérisé en ce que** l'ancre de serrage est formée par l'entraîneur (56) de la bague de gonflage (11).

18. Dispositif de gonflage de pneumatiques selon l'une des revendications précédentes, **caractérisé en ce que** pour déplacer la cloche de gonflage de pneumatiques (4), deux vérins pneumatiques (15) et un vérin de commande hydraulique (14) sont fixés au bâti de machine (2) selon un arrangement parallèle et dont les tiges de piston (81, 82) sont reliées à la plaque de gonflage (10), et **en ce que** le déplacement des vérins pneumatiques (15) peut être commandé à l'aide du vérin de commande (14).
